# NEUE EUROPÄISCHE PATENTSCHRIFT

(11) **EP 2 653 681 B2**
(45) Veröffentlichungstag und Bekanntmachung des Hinweises auf die Entscheidung über den Einspruch: **04.12.2019**
(45) Hinweis auf die Patenterteilung: 27.07.2016
(21) Anmeldenummer: 12164927.1
(22) Anmeldetag: 20.04.2012
(51) Int. Cl.: F01N 3/035, B01D 53/94, F01N 3/10, F01N 3/20, F01N 3/022

(54) **Verwendung eines Beschichteten Dieselpartikelfilters zum Verhindern der Kontamination eines SCR-Katalysators**
Use of a coated diesel particulate filter to prevent contamination of a SCR catalyst
Utilisation d' un filtre à particules diésel revêtu pour éviter la contamination d' un catalysateur SCR

(43) Veröffentlichungstag der Anmeldung: 23.10.2013
(73) Patentinhaber: Umicore AG & Co. KG, 63457 Hanau-Wolfgang (DE)
(72) Erfinder: Pfeiffer, Marcus, 42719 Solingen (DE); Schiffer, Michael, 63450 Hanau (DE); Dornhaus, Franz, Kobe 658-0063 (JP); Basso, Stephan, 57000 Metz (FR); Schuetze, Frank-Walter, 63739 Aschaffenburg (DE)

(56) Entgegenhaltungen:
- WO-A1-00/29726
- WO-A1-2008/011146
- WO-A1-2008/088649
- WO-A1-2008/117941
- WO-A1-2009/136206
- WO-A1-2012/175948
- WO-A1-2013/088128
- WO-A1-2013/088133
- DE-B- 1 027 880
- GB-A- 1 111 950
- GB-A- 1 200 780
- JP-A- 2010 211 946
- US-A- 2 730 189
- US-A1- 2009 137 386
- US-A1- 2010 166 629
- US-A1- 2010 180 581
- US-A1- 2011 014 099
- US-A1- 2011 138 777
- US-A1- 2011 212 008
- R. M. HECK ET AL: "CATALYTIC AIR POLLUTION CONTROL", COMMERCIAL TECHNOLOGY, 29 March 2009 (2009-03-29), pages 254-258, 302-303, 324-332, XP055376673,
- "Catalyzed Diesel Filters", DieselNet.com, May 1999 (1999-05), pages 1-5, XP055376784,

## Beschreibung

Die vorliegende Erfindung betrifft die Verwendung eines beschichteten Dieselpartikelfilters zum Verhindern der Kontamination eines SCR-Katalysators in einem Abgasbehandlungssystem, das in Strömungsrichtung des Abgases einen Platin enthaltenden Oxidationskatalysator, ein Dieselpartikelfilter und einen SCR-Katalysator umfasst, mit Platin.

Das Abgas von mit Dieselmotoren betriebenen Kraftfahrzeugen enthält neben Kohlenmonoxid (CO) und Stickoxiden (NOₓ) auch Bestandteile, die aus der unvollständigen Verbrennung des Kraftstoffs im Brennraum des Zylinders herrühren. Dazu gehören neben Rest-Kohlenwasserstoffen (HC), die meist ebenfalls überwiegend gasförmig vorliegen, Partikelemissionen, auch als "Dieselruß" oder "Russpartikel" bezeichnet.

Zur Reinigung dieser Abgase müssen die genannten Bestandteile möglichst vollständig in unschädliche Verbindungen umgewandelt werden, was nur unter Einsatz geeigneter Katalysatoren möglich ist.

So können Kohlenmonoxid (CO), gasförmige Kohlenwasserstoffe (HC) und gegebenenfalls den Russpartikeln anhaftende organische Agglomerate (sog. "Volatile Organic Fraction" VOF) mit Hilfe von Oxidationskatalysatoren oxidativ entfernt werden. Oxidationskatalysatoren sind im Stand der Technik seit langem bekannt und in den verschiedensten Ausführungsformen beschrieben. Zumeist werden die Edelmetalle Platin und/oder Palladium als oxidationskatalytisch aktive Komponenten eingesetzt.

Zur Entfernung von Partikelemissionen aus dem Abgas von Dieselfahrzeugen werden spezielle Partikelfilter eingesetzt, die zur Verbesserung ihrer Eigenschaften mit einer oxidationskatalytisch aktiven Beschichtung versehen sein können. Eine solche Beschichtung dient, wie in der SAE-Schrift SAE 2005-01-1756 ausführlich beschrieben, der Erniedrigung der Aktivierungsenergie für den sauerstoffbasierten Partikelabbrand (Russverbrennung) und somit der Absenkung der Russzündtemperatur auf dem Filter, der Verbesserung des passiven Regenerationsverhaltens durch Oxidation von im Abgas enthaltenen Stickstoffmonoxid zu Stickstoffdioxid und der Unterdrückung von Durchbrüchen von Kohlenwasserstoff- und Kohlenmonoxidemissionen.

Stickoxide aus Abgasen von Dieselmotoren können beispielsweise mittels selektiver katalytischer Reduktion (Selective Catalytic Reduktion, SCR) mit Ammoniak als Reduktionsmittel an einem geeigneten Katalysator, dem SCR-Katalysator, zu unschädlichem Stickstoff umgesetzt werden. Das Reduktionsmittel muss aus einem mitgeführten Zusatztank mittels einer Einspritzdüse vor dem SCR-Katalysator in den Abgasstrang eindosiert werden. Bevorzugt wird aber nicht Ammoniak selbst mitgeführt, sondern eine leicht zu Ammoniak zersetzliche Verbindung wie zum Beispiel Harnstoff oder Ammoniumcarbamat.

Damit die angesprochenen schädlichen Abgaskomponenten im erforderlichen Ausmaß entfernt werden können, müssen die genannten Katalysatoren bzw. Filter in geeigneter Weise zu einem Abgasbehandlungssystem miteinander kombiniert werden.

In bekannten Abgasbehandlungssystemen, die beispielsweise in der WO99/39809 und der WO2009/140989 beschrieben sind, werden in Strömungsrichtung des Abgases zuerst der Oxidationskatalysator, sodann das Dieselpartikelfilter und schließlich der SCR-Katalysator angeordnet. Zwischen Dieselpartikelfilter und SCR-Katalysator befindet sich darüber hinaus noch eine Einspritzvorrichtung zum Zudosieren des Reduktionsmittels.

Beim Betrieb dieser Systeme zeigt sich, dass der Oxidationskatalysator, insbesondere wenn er platinreich ist, bei hohen Temperaturen und abhängig von λ-wert Spuren von Platin in die Gasphase abgibt, die mit dem Abgasstrom zum SCR-Katalysator transportiert werden und diesen kontaminieren. Da Platin eine hohe Aktivität zur Oxidation von Ammoniak aufweist, führt das dazu, dass bei höheren Temperaturen oberhalb von ca. 300°C nicht mehr ausreichend Ammoniak für die SCR-Reaktion zur Verfügung steht und der Umsatz von Stickoxiden abnimmt. Außerdem wird eine erhöhte Bildung von Distickstoffmonoxid (N₂O) vornehmlich im Temperaturbereich um 250°C beobachtet. Dieses Phänomen ist zum Beispiel in den SAE-Schriften SAE 2008-01-2488 und SAE 2009-01-0627 beschrieben.

Zur Lösung dieses Problems schlägt die US2011/138777 A1 vor, in das Abgassystem nach dem Oxidationskatalysator und vor dem SCR-Katalysator eine "Platingruppenmetallfalle" anzuordnen, die als wirksame Bestandteile Ceroxid oder ein Perovskit-Material enthält.
Allerdings hat dies den Nachteil, dass das Abgasbehandlungssystem durch ein zusätzliches Bauteil ergänzt werden muss, was im Hinblick auf den beschränkten Raum im Unterboden eines Fahrzeuges nur schwer zu realisieren ist. Außerdem führt diese Lösung zu höheren Kosten.

Aufgabe der vorliegenden Erfindung ist es somit, Maßnahmen zur Verfügung zu stellen, die es erlauben, vom Oxidationskatalysator oder anderen Bauteilen abgegebene Platinspuren zu entfernen und eine Kontamination des SCR-Katalysators zu verhindern, ohne dass damit zusätzliche Bauteile nötig sind oder wesentlich höhere Kosten verursacht werden. Im Übrigen soll die Funktion des gesamten Abgasbehandlungssystems bzw. seiner einzelnen Bestandteile möglichst unbeeinflusst bleiben.

Es wurde nun überraschend gefunden, dass diese Aufgabe gelöst wird, wenn man einen geeigneten Platinfänger in das Partikelfilter integriert.

Die vorliegende Erfindung betrifft demnach die Verwendung eines Dieselpartikelfilters, das eine oxidationskatalytisch aktive Beschichtung aufweist und das eine Materialzone umfasst, die im Abgasstrom enthaltene Platinspuren entfernt, dadurch gekennzeichnet, dass die oxidationskatalytisch aktive Beschichtung und die Materialzone, die die im Abgasstrom enthaltenen Platinspuren entfernt, in getrennten Zonen auf dem Filtersubstrat vorliegen, die Materialzone, die die im Abgasstrom enthaltenen Platinspuren entfernt, 10 bis 60% der Gesamtlänge des Filtersubstrats einnimmt, mindestens aber 2,5 cm (etwa 1 Zoll), die oxidationskatalytisch aktive Beschichtung 40 bis 90% der Gesamtlänge des Filtersubstrats einnimmt und wobei L = L₁ + L₂ gilt, wobei L die gesamte Länge des Filtersubstrats, L₁ die Länge der oxidationskatalytisch aktiven Zone und L₂ die Länge der Zone, die die im Abgasstrom enthaltenen Platinspuren entfernt, bedeuten, zum Verhindern der Kontamination eines SCR-Katalysators in einem Abgasbehandlungssystem, das in Strömungsrichtung des Abgases einen Platin enthaltenden Oxidationskatalysator, ein Dieselpartikelfilter und einen SCR-Katalysator umfasst, mit Platin.

Als Dieselpartikelfilter werden bevorzugt Wandflussfiltersubstrate verwendet. Das sind Wabenkörper mit wechselseitig gasdicht verschlossenen An- und Abströmkanälen, die durch poröse Wände begrenzt und voneinander abgetrennt sind. Das in die Anströmkanäle einströmende partikelhaltige Abgas wird durch einen auf der Austrittsseite befindlichen gasdichten Verschlussstopfen zum Durchtritt durch die poröse Wand gezwungen und tritt aus den auf der Anströmseite verschlossenen Abströmkanälen aus dem Wandflussfiltersubstrat wieder aus. Dabei wird Dieselruß aus dem Abgas herausgefiltert.

Die Wabenkörper können aus Metall und insbesondere aus keramischen Materialien bestehen. Bevorzugt bestehen sie aus Cordierit, aus Siliciumcarbid, aus Mullit oder aus Aluminiumtitanat. Solche Wabenkörper sind in der Literatur zahlreich beschrieben.

Mit einer oxidationskatalytisch aktiven Beschichtung versehene Dieselpartikelfilter sind als cDPF (catalyzed Diesel Particulte Filter) bekannt und in der Literatur beschrieben. Als oxidationskatalytisch aktive Bestandteile weisen sie in der Regel ein oder mehrere Platingruppenelemente, insbesondere Platin, Palladium und/oder Rhodium auf. Diese liegen auf dem Filtersubstrat auf einem hochoberflächigen, inerten Trägermaterial geträgert in Form einer Beschichtung vor. Eine besonders bevorzugte oxidationskatalytisch aktive Beschichtung enthält Platin auf Aluminiumoxid.

Gemäss erfindungsgemäßer Verwendung wird nun dieser oxidationskatalytisch aktive Dieselpartikelfilter mit einer zusätzlichen Materialzone versehen, die die im Abgasstrom enthaltenen Platinspuren entfernt.

Die oxidations-katalytisch aktive Beschichtung und die Materialzone, die die im Abgasstrom enthaltenen Platinspuren entfernt, sind in getrennten Zonen auf dem Filtersubstrat angeordnet. Die oxidations-katalytisch aktive Beschichtung erstreckt sich nicht über die gesamte Länge des Filtersubstrates.

Ist also die gesamte Länge des Filtersubstrats L, die Länge der oxidationskatalytisch aktiven Zone L₁ und die Länge der Zone, die die im Abgasstrom enthaltenen Platinspuren entfernt, L₂, so gilt L=L₁+L₂.
Die Materialzone, die die im Abgasstrom enthaltenen Platinspuren entfernt (L₁) nimmt 10 bis 60% der Gesamtlänge des Filtersubstrats ein, mindestens aber 2,5 cm (etwa 1 Zoll). Dementsprechend nimmt die oxidationskatalytisch aktive Zone (L₂) 40 bis 90% der Gesamtlänge des Filtersubstrates ein.

In den Dieselpartikelfiltern ist die Materialzone, die die im Abgasstrom enthaltenen Platinspuren entfernt, bevorzugt filterabströmseitig angeordnet. Das heißt, die Materialzone, die die im Abgasstrom enthaltenen Platinspuren entfernt, weist nach Einbau des Filters in ein Abgasbehandlungssystem in Richtung des SCR-Katalysators.

Die Materialzone, die im Abgasstrom enthaltene Platinspuren entfernt, enthält als aktiven Bestandteil bevorzugt Palladium, Gold oder Mischungen davon. Bevorzugt ist sie frei von weiteren katalytisch aktiven Bestandteilen. Allerdings liegen die genannten aktiven Bestandteile zur Erhöhung der Effizienz als Platinfänger bevorzugt hochdispers auf typischen Trägeroxiden vor. Dies wird unten näher beschrieben. Im frischen Zustand, d.h. bevor der Dieselpartikelfilter in Gebrauch genommen wird, ist die Materialzone frei von Platin. Mit zunehmender Gebrauchsdauer sammeln sich selbstverständlich die aus dem Abgas entfernten Platinspuren an, diese liegen allerdings erfahrungsgemäß nur im ppm Bereich und sind somit für die meisten katalytischen Funktionen nicht oder nur unzureichend wirksam.

Die zu verwendenden Mengen an Palladium, Gold bzw. Mischungen davon hängen von den konkreten Erfordernissen des betrachteten Abgasbehandlungssystems ab. In der Regel betragen die Mengen aber 0,02 bis 0,21 g/l (0,5 bis 6 g/ft³), bevorzugt 0,04 bis 0,11 g/l (1 bis 3 g/ft³) (die Mengen beziehen sich auf das Filtervolumen, das von der Materialzone bzw. -schicht eingenommen wird.

Palladium, Gold bzw. Mischungen davon liegen auf dem Dieselpartikelfilter bevorzugt auf einem hochoberflächigen, inerten Trägeroxid geträgert vor. Geeignete Trägeroxide sind Aluminiumoxide, dotierte Aluminiumoxide, Titandioxid, Ceroxid, Zirkonoxid, Cer/Zirkon-Mischoxide, Siliciumdioxid oder Mischungen aus zwei oder mehreren der genannten Oxide. Diese sind dem Fachmann bekannt und im Handel erhältlich.
Das Dieselpartikelfilter eignet sich in besonderer Weise als Bestandteil eines Abgasbehandlungssystems zur Reinigung von Abgasen eines Dieselmotors, das in Strömungsrichtung des Abgases einen Platin enthaltenden Oxidationskatalysator, das Dieselpartikelfilter und einen SCR-Katalysator umfasst.

Als Platin enthaltender Oxidationskatalysator kommen insbesondere konventionelle Oxidationskatalysatoren in Frage, die zahlreich beschrieben und dem Fachmann bekannt sind. In der Regel handelt es sich um Durchflusswabenkörper, auf die die katalytisch wirksamen Bestandteile in Form einer Beschichtung aufgebracht sind. Neben Platin können sie auch weitere oxidationskatalytisch aktive Metalle enthalten, wie beispielsweise Palladium und Rhodium.

Auch als SCR-Katalysator können konventionelle Produkte eingesetzt werden, die zahlreich beschrieben und dem Fachmann bekannt sind. Auch hier handelt es sich üblicherweise um Durchflusswabenkörper, auf die die katalytisch wirksamen Bestandteile in Form einer Beschichtung aufgebracht sind.

Es eignen sich SCR-Katalysatoren auf Basis von Vanadiumoxid oder auf Basis Vanadium-freier Mischoxide ebenso, wie solche auf Zeolith-Basis. SCR-Katalysatoren auf Zeolith-Basis sind bevorzugt, insbesondere solche, die mit Eisen und/oder Kupfer ausgetauscht sind.

Die Aufbringung der katalytisch aktiven Beschichtung auf Durchflusswabenkörper und Filterkörper erfolgt nach den üblichen Tauchbeschichtungsverfahren bzw. Pump- und Saug-Beschichtungsverfahren mit sich anschließender thermischer Nachbehandlung (Kalzination und gegebenenfalls Reduktion mit Formiergas oder Wasserstoff), die für diese Abgasreinigungsaggregate aus dem Stand der Technik hinreichend bekannt sind.

Der Dieselpartikelfilter eignet sich in hervorragender Weise zum Entfernen von Platinspuren, die im Abgas enthalten sind. Er schützt damit abströmseitig folgende SCR-Katalysatoren nachhaltig vor Kontamination mit Platin und damit vor Aktivitätsverlust.
Er wird deshalb mit Vorteil als Dieselpartikelfilter in einem Abgasbehandlungssystem zur Reinigung von Abgasen eines Dieselmotores, das in Strömungsrichtung des Abgases einen Platin enthaltenden Oxidationskatalysator, ein Dieselpartikelfilter und einen SCR-Katalysator umfasst eingesetzt.

### Beispiel 1 (nicht erfindungsgemäß)

Ein konventionelles, über seine ganze Länge mit Platin und Palladium homogen beschichtetes Wandflussfilter mit einer Edelmetallbeladung von 0,53 g/l (15g/ft³) und einem Pt/Pd Verhältnis von 12/1 wurde auf einem Viertel seiner Länge mittels eines konventionellen Tauchverfahrens mit einer zusätzlichen, Palladium enthaltenden Zone beschichtet. Die Palladiummenge betrug 0,21 g/l (6 g/ft³) bezogen auf das Volumen der Zone, so dass die gesamte Edelmetallbeladung auf dem Filter auf 0,58 g/l (16,5g/ft³) anstieg.

Dieses Dieselpartikelfilter (nachstehend K1 genannt) wurde wie folgt getestet und mit dem oben genannten konventionellen Wandflussfilter ohne zusätzliche Beladung mit Palladium (nachstehend VK1 genannt) verglichen:
K1 wurde ein Bohrkern mit einem Durchmesser von 25, 4 Millimeter entnommen und in ein Test-Abgasbehandlungssystem eingebaut, das anströmseitig einen Bohrkern eines konventionellen Dieseloxidationskatalysators (Durchmesser 25,4 Millimeter; Edelmetallbeladung 27 g/ft₃;
Pt/Pd Verhältnis 5/2) und abströmseitig einen konventionellen SCR-Katalysator auf Basis von Fe-Zeolith umfasste. Der Bohrkern von K1 wurde so eingebaut, dass die zusätzliche, Pd-haltige Zone in Richtung des SCR-Katalysators zeigte.

Dieses Test-Abgasbehandlungssystem wurde zunächst bei einer Temperatur von 720°C anströmseitig des Dieseloxidationskatalysators (entspricht 700°C abströmseitig des Dieseloxidationskatalysators) für 12,5 Stunden einem Gas aus 10% Sauerstoff und 90% Stickstoff gealtert.
Sodann wurde die NOx-Umsetzungsrate des SCR-Katalysators, sowie die N₂O-Bildung bei 500°C, 250°C und 200°C in einer Modellgasanlage bestimmt.

Folgendes Modellgas wurde verwendet:
- NO 500ppm
- NO₂ -
- NH₃ 450ppm (alpha = 0,9)
- O₂ 5%
- H₂O 5%
- N₂ Rest

Das genannte Verfahren wurde mit einem Bohrkern von VK1 wiederholt.

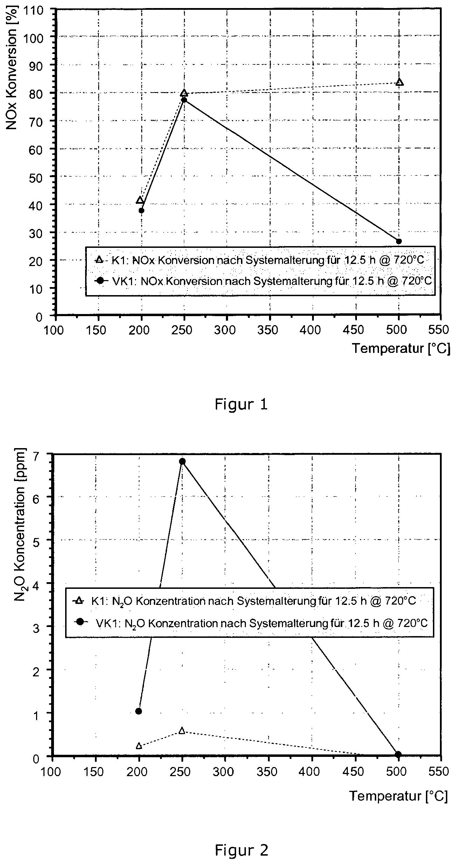

Figur 1 zeigt das Ergebnis bezüglich der NOx-Umsetzungsrate. Demnach unterscheiden sich die K1 und VK1 enthaltenden Systeme bei 200°C und 250°C nicht wesentlich. Während aber bei 500°C das das Filter K1 enthaltende System auf hohem Umsetzungsniveau bleibt, zeigt das das konventionelle Filter VK1 enthaltendes System einen dramatischen Rückgang der NOx Umsetzung.

Figur 2 zeigt das Ergebnis bezüglich der N₂O-Bildung. Während das Filter K1 enthaltende System im gesamten Messbereich nur geringe Mengen an N₂O bildet, zeigt das das konventionelle Filter VK1 enthaltende System bei 250°C einen dramatischen Anstieg der N₂O-Bildung.

Somit ist offensichtlich, dass die zusätzliche Palladiumzone auf dem Dieselpartikelfilter K1 den abströmseitigen SCR-Katalysator wirksam vor Platin-Kontamination schützt.

## Patentansprüche

1. Verwendung eines Dieselpartikelfilters, das eine oxidationskatalytisch aktive Beschichtung aufweist und das eine Materialzone umfasst, die im Abgasstrom enthaltene Platinspuren entfernt, **dadurch gekennzeichnet, dass** die oxidationskatalytisch aktive Beschichtung und die Materialzone, die die im Abgasstrom enthaltenen Platinspuren entfernt, in getrennten Zonen auf dem Filtersubstrat vorliegen, die Materialzone, die die im Abgasstrom enthaltenen Platinspuren entfernt, 10 bis 60% der Gesamtlänge des Filtersubstrats einnimmt, mindestens aber 2,5 cm (etwa 1 Zoll), die oxidationskatalytisch aktive Beschichtung 40 bis 90% der Gesamtlänge des Filtersubstrats einnimmt und wobei L = L₁ + L₂ gilt, wobei L die gesamte Länge des Filtersubstrats, L₁ die Länge der oxidationskatalytisch aktiven Zone und L₂ die Länge der Zone, die die im Abgasstrom enthaltenen Platinspuren entfernt, bedeuten, zum Verhindern der Kontamination eines SCR-Katalysators in einem Abgasbehandlungssystem, das in Strömungsrichtung des Abgases einen Platin enthaltenden Oxidationskatalysator, ein Dieselpartikelfilter und einen SCR-Katalysator umfasst, mit Platin.

2. Verwendung nach Anspruch 1, **dadurch gekennzeichnet, dass** es sich um ein Wandflussfiltersubstrat aus Cordierit, Siliciumcarbid, Mullit oder Aluminiumtitanat handelt.

3. Verwendung nach Anspruch 1 und/oder 2, **dadurch gekennzeichnet, dass** die oxidationskatalytisch aktive Beschichtung ein oder mehrere Platingruppenelemente enthält.

4. Verwendung nach einem oder mehreren der Ansprüche 1 bis 3, **dadurch gekennzeichnet, dass** sich die Materialzone, die die im Abgasstrom enthaltenen Platinspuren entfernt, filterabströmseitig angeordnet ist.

5. Verwendung nach einem oder mehreren der Ansprüche 1 bis 4, **dadurch gekennzeichnet, dass** die Materialzone, die im Abgasstrom enthaltene Platinspuren entfernt, als aktiven Bestandteil Palladium, Gold oder Mischungen davon enthält.

6. Verwendung nach Anspruch 5, **dadurch gekennzeichnet, dass** Palladium, Gold bzw. Mischungen davon, bezogen auf das Filtervolumen, das die Materialzone einnimmt, in Mengen von 0,02 bis 0,21 g/l (0,5 bis 6 g/ft³), vorliegen.

7. Verwendung nach Anspruch 5, **dadurch gekennzeichnet, dass** Palladium, Gold bzw. Mischungen davon, bezogen auf das Filtervolumen, das die Materialzone einnimmt, in Mengen von 0,04 bis 0,11 g/l (1 bis 3 g/ft³) vorliegen.

8. Verwendung nach einem der Ansprüche 5 bis 7, **dadurch gekennzeichnet, dass** Palladium, Gold bzw. Mischungen davon auf einem hochoberflächigen, inerten Trägeroxid geträgert vorliegen.

9. Verwendung nach Anspruch 8, **dadurch gekennzeichnet, dass** das Trägeroxid Aluminiumoxid, dotiertes Aluminiumoxide, Titandioxid, Ceroxid, Zirkonoxid, Cer/Zirkon-Mischoxid, Siliciumdioxid oder eine Mischung aus zwei oder mehreren der genannten Oxide ist.

## Claims

1. Use of a diesel particulate filter having an oxidation-catalytically active coating and comprising a material zone which removes traces of platinum contained in the exhaust gas stream, **characterized in that** the oxidation-catalytically active coating and the material zone which removes the traces of platinum from the exhaust gas stream are present in separate zones on the filter substrate, the material zone which removes the traces of platinum contained in the exhaust gas stream occupies 10 to 60% of the overall length of the filter substrate, at least however 2.5 cm (approx. 1 inch), the oxidation-catalytically active coating occupies 40 to 90% of the overall length of the filter substrate, and wherein L = L₁ + L₂ applies, wherein L is the overall length of the filter substrate, L₁ is the length of the oxidation-catalytically active zone, and L₂ is the length of the zone which removes the platinum group elements from the exhaust gas stream, for preventing contamination with platinum of an SCR catalyst in an exhaust gas treatment system that in the direction of flow of the exhaust gas comprises a diesel particle filter, an SCR catalyst, and an oxidation catalyst containing a platinum.

2. Use according to Claim 1, **characterized in that** it comprises a wall flow filter substrate made of cordierite, silicon carbide, mullite, or aluminum titanate.

3. Use according to Claim 1 and/or 2, **characterized in that** the oxidation-catalytically active coating contains one or a plurality of platinum group elements.

4. Use according to one or more of Claims 1 to 3, **characterized in that** the material zone which removes the traces of platinum from the exhaust gas stream is arranged downstream of the filter.

5. Use according to one or more of Claims 1 to 4, **characterized in that** the material zone which removes the traces of platinum from the exhaust gas stream contains palladium, gold or mixtures thereof as the active component.

6. Use according to Claim 5, **characterized in that** palladium, gold or mixtures thereof, in terms of the filter volume that the material zone occupies, are present in quantities of 0.02 to 0.21 g/L (0.5 to 6 g/ft³).

7. Use according to Claim 5, **characterized in that** palladium, gold or mixtures thereof, in terms of the filter volume that the material zone occupies, are present in quantities of 0.04 to 0.11 g/L (1 to 3 g/ft³).

8. Use according to one of Claims 5 to 7, **characterized in that** palladium, gold or mixtures thereof are present supported on an inert carrier oxide with a high surface area.

9. Use according to Claim 8, **characterized in that** the carrier oxide is aluminum oxide, doped aluminum oxides, titanium oxide, cerium oxide, zirconium oxide, cerium/zirconium mixed oxide, silicon dioxide or a mixture of two or more of the named oxides.

## Revendications

1. Utilisation d'un filtre à particules diesel, qui présente un revêtement actif en catalyse par oxydation et qui comprend une zone de matériau qui élimine les traces de platine contenues dans le flux de gaz d'échappement, **caractérisée en ce que** le revêtement actif en catalyse par oxydation et la zone de matériau qui élimine les traces de platine contenues dans le flux de gaz d'échappement se trouvent dans des zones séparées sur le substrat filtre, la zone de matériau qui élimine les traces de platine contenues dans le flux de gaz d'échappement occupe 10 à 60 % de la longueur totale du substrat filtre, mais au moins 2,5 cm (environ 1 pouce), le revêtement actif en catalyse par oxydation occupe 40 à 90 % de la longueur totale du substrat filtre et L = L₁ + L₂, L signifiant la longueur totale du substrat filtre, L₁ signifiant la longueur de la zone active en catalyse par oxydation et L₂ signifiant la longueur de la zone qui élimine les traces de platine contenues dans le flux de gaz d'échappement, pour empêcher la contamination, par du platine, d'un catalyseur SCR (réduction par catalyse sélective) dans un système de traitement de gaz d'échappement qui comprend, dans le sens d'écoulement des gaz d'échappement, un catalyseur d'oxydation contenant du platine, un filtre à particules diesel et un catalyseur SCR.

2. Utilisation selon la revendication 1, **caractérisée en ce qu'**il s'agit d'un substrat filtre à parois poreuses en cordiérite, en carbure de silicium, en mullite ou en titanate d'aluminium.

3. Utilisation selon la revendication 1 et/ou 2, **caractérisée en ce que** le revêtement actif en catalyse par oxydation contient un ou plusieurs éléments du groupe du platine.

4. Utilisation selon l'une ou plusieurs des revendications 1 à 3, **caractérisée en ce que** la zone de matériau, qui élimine les traces de platine contenues dans le flux de gaz d'échappement, est agencée côté aval du filtre.

5. Utilisation selon l'une ou plusieurs des revendications 1 à 4, **caractérisée en ce que** la zone de matériau, qui élimine les traces de platine contenues dans le flux de gaz d'échappement, contient, comme constituant actif, du palladium, de l'or ou des mélanges de ceux-ci.

6. Utilisation selon la revendication 5, **caractérisée en ce que** le palladium, l'or ou les mélanges de ceux-ci sont présents en des quantités de 0,02 à 0,21 g/l (0,5 à 6 g/pied³) par rapport au volume de filtre qu'occupe la zone de matériau.

7. Utilisation selon la revendication 5, **caractérisée en ce que** le palladium, l'or ou les mélanges de ceux-ci, sont présents dans des quantités de 0,04 à 0,11 g/l (1 à 3 g/pied³) par rapport au volume de filtre qu'occupe la zone de matériau.

8. Utilisation selon l'une quelconque des revendications 5 à 7, **caractérisée en ce que** le palladium, l'or ou les mélanges de ceux-ci se trouvent sous forme supportée sur un oxyde support inerte à surface élevée.

9. Utilisation selon la revendication 8, **caractérisée en ce que** l'oxyde support est de l'oxyde d'aluminium, des oxydes d'aluminium dopés, du dioxyde de titane, de l'oxyde de cérium, de l'oxyde de zirconium, un oxyde mixte de cérium/zirconium, du dioxyde de silicium ou un mélange de deux ou plus des oxydes mentionnés.
